# EUROPEAN PATENT APPLICATION

(11) **EP 1 197 317 A2**
(43) Date of publication of application: **17.04.2002**
(21) Application number: 01123348.3
(22) Date of filing: 09.10.2001
(51) Int. Cl.: B29D 30/30, B29D 30/24

(54) **Tire building method and machine**

(30) Priority: 10.10.2000 IT TO000946
(71) Applicant: BRIDGESTONE CORPORATION, Tokyo 104-0031 (JP)
(72) Inventor: Baldoni, Viscardo, 00126 Roma (IT); Milano, Domenico, 00159 Roma (IT)
(74) Representative: Jorio, Paolo

(57) **Abstract**

To build vehicle tires, portions (9) of elastomeric material are placed successively one on top of the other on a building drum (18) having two half-drums (22) of independently variable diameters; the longitudinal dimensions of at least one portion (9) being measured prior to feeding the portion (9) onto the building drum (18); and the diameter of each half-drum (22) being varied as a function of the longitudinal dimensions of the portion (9) to obtain an even overlap at all times of the opposite end edges (9a, 9b) of the portion (9) on the building drum (18).

## Description

The present invention relates to a tire building method.

When building a tire on a unistage building drum comprising a cylindrical, axially fixed, central portion and two half-drums located on either side of and movable axially in opposite directions with respect to the central portion, the building drum is supplied transversely, by means of one or more conveyor belts, with a succession of portions of sheet material, each of which is wound about the building drum to overlap the front and rear edges of the portion, which are then stitched together to form a tubular body coaxial with the building drum.

An important point to note in connection with the above, particularly when working with portions comprising preassembled strips of different materials, is that the front and rear edges of each portion are invariably nonparallel, due to systematic errors caused by uneven shrinkage of the materials of which the portion is made, different extrusion conditions, different aging of the various materials, and different reeling and storage conditions. During the actual building of the tire, further systematic errors are also introduced by the construction tolerances of the building drum.

As a consequence of such systematic errors, the front and rear edges of a portion wound carelessly onto the building drum lie substantially along the same generating line of the drum, and frequent poor overlapping of the end edges of the portions rules out any possibility of automatic unsupervised stitching. At present, in fact, stitching is normally preceded by an operator manually stretching the portions locally to compensate for any overlap errors.

It is an object of the present invention to provide a tire building method designed to eliminate the aforementioned drawbacks.

More specifically, it is an object of the present invention to provide a tire building method permitting the use of an unsupervised automatic stitching device.

According to the present invention, there is provided a tire building method, the method comprising the steps of feeding at least one portion of elastomeric material, having two opposite transverse edges, onto a building drum of variable radial dimensions; measuring distances between corresponding points on said two transverse edges prior to feeding said portion onto the building drum; and winding said portion onto said building drum so as to overlap said two edges; said radial dimensions being varied, prior to winding said portion onto said drum, as a function of said distances, so that said two edges are overlapped uniformly at all times along the whole width of the portion.

The present invention also relates to a tire building machine.

According to the present invention, there is provided a tire building machine, the machine comprising a building drum; and a feed conveyor for feeding at least one portion of elastomeric material onto said building drum in a given direction; characterized by comprising measuring means associated with said conveyor to measure longitudinal dimensions of said portion in said feed direction; said building drum being a building drum of variable radial dimensions and comprising adjusting means for varying said radial dimensions as a function of said longitudinal dimensions.

A non-limiting embodiment of the invention will be described by way of example with reference to the accompanying drawings, in which:
Figure 1 shows a schematic view in perspective, with parts removed for clarity, of a portion of a preferred embodiment of the machine according to the present invention;
Figure 2 shows a larger-scale axial section of a detail of Figure 1.

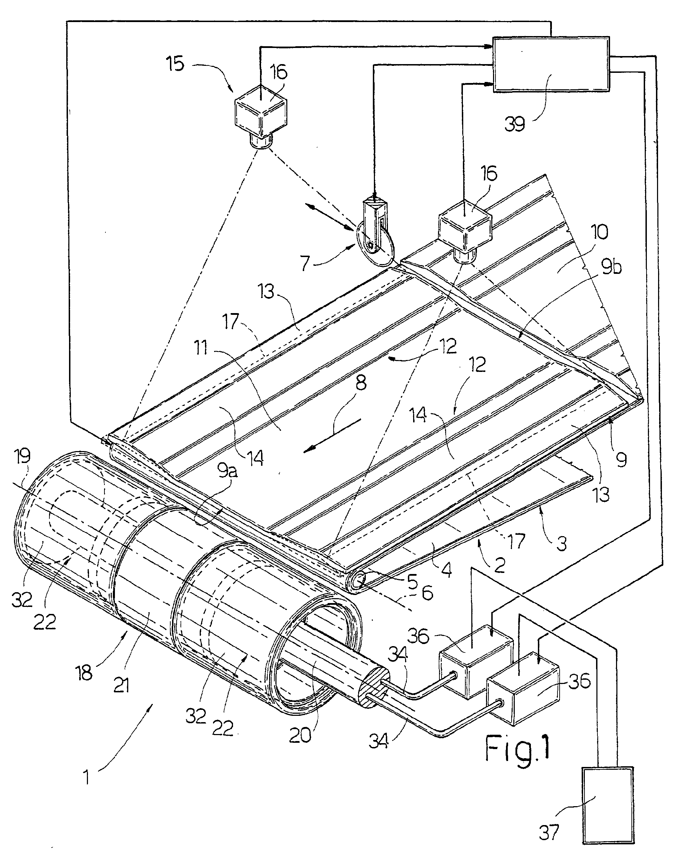

Number 1 in Figure 1 indicates as a whole a machine for building a road vehicle tire (not shown).

Machine 1 comprises a feed device 2 for supplying sheet material and in turn comprising at least one conveyor 3 having a belt 4 looped about a drive roller 5 mounted to rotate about a substantially horizontal axis 6, and about at least one return roller not shown.

A known cutting assembly 7 is mounted over conveyor 3, and is movable crosswise to the traveling direction 8 of belt 4 to successively cut portions 9 off the front end of a continuous strip 10 of elastomeric material supported on belt 4. In the example shown, strip 10 is a preferably co-extruded preassembly of a central strip defined by an innerliner 11, and of two lateral strips 12, each of which comprises a lateral wall 13 and an abrasion strip 14 connecting the relative lateral wall 13 to a relative lateral edge of innerliner 11.

Over conveyor 3 and downstream from cutting assembly 7, there is provided an optical measuring device 15 preferably defined by two CCD television cameras, each of which is indicated 16 and provides for measuring the distance between a front edge 9a and a rear edge 9b of a portion 9 along a respective line 17 perpendicular to axis 6. In general, each line 17 is located close to a relative lateral edge of portion 9, and, in the example shown, extends substantially along respective lateral strip 12, at the join between relative lateral wall 13 and relative abrasion strip 14.

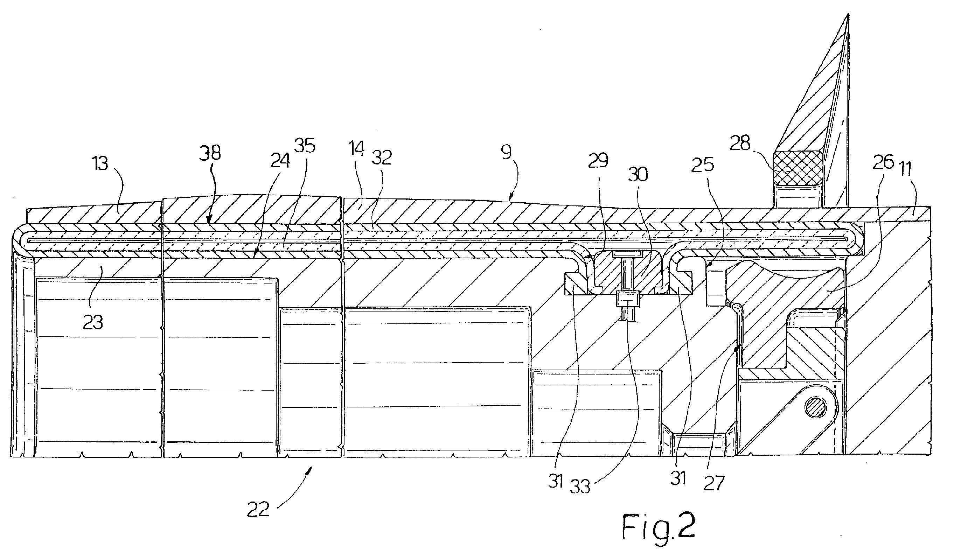

Machine 1 also comprises a unistage building drum 18 mounted to rotate about an axis 19 parallel to axis 6, and positioned facing and adjacent to roller 5 of conveyor 3. Building drum 18 comprises a central shaft 20 coaxial with axis 19; a cylindrical central body 21 integral with shaft 20; and two half-drums 22 on opposite sides of central body 21 and coaxial with axis 19. The two half-drums 22 are fitted to shaft 20 to rotate, with shaft 20, about axis 19, and are movable axially in opposite directions along shaft 20, and by means of a known actuating device not shown, from a rest position shown in Figures 1 and 2.

As shown more clearly in Figure 2, each half-drum 22 comprises a cylindrical outer jacket 23 having a cylindrical outer surface 24, which is coaxial with axis 19 and comprises, adjacent to central body 21, a number of slots 25 (only one shown) for the passage of respective sectors 26 (only one shown) of a known clamping device 27 for clamping a respective bead bundle 28 of the tire (not shown) being built.

Outwards of slots 25, each half-drum 22 comprises an annular groove 29 in which are clamped, by means of a central insert 30, the two shoes 31 of a forming bladder 32, which communicates, via a conduit 33 and a known rotary distributor (not shown), with a respective conduit 34 (Figure 1), and is lined with a layer 35 of spongy elastomeric material. In a variation not shown, bladder 32 is made entirely or partly of spongy elastomeric material.

As shown in Figure 1, each conduit 34 communicates via a respective solenoid valve 36 with a pneumatic device 37 for both feeding compressed air into and generating a vacuum of a given adjustable value inside bladder 32.

In general, the value of the vacuum that can be generated inside bladder 32 is preferably varied within a given range in successive steps, as opposed to continuously. In actual practice, spongy layer 35 is about 3-4 millimeters thick to obtain a total variation in diameter of about 4 mm in at least two successive steps. By controlling solenoid valves 36, different vacuum values may obviously be generated in the two bladders 32.

As shown in Figure 2, each bladder 32 surrounds relative half-drum 22, rests on relative surface 24 in the rest position, and is defined externally by a cylindrical surface 38, which is substantially coplanar with the outer surface of central body 21 and defines the outer surface of relative half-drum 22.

In actual use, machine 1 is controlled by a logic unit 39, which receives the length values of each portion 9 detected by optical measuring device 15, and compares them with reference values of what the lengths should be to obtain an even overlap of the two end edges 9a and 9b of portion 9. In the event the comparison between each of the values measured along lines 17 and the reference values results in an error being detected, logic unit 39 activates pneumatic device 17 and controls solenoid valves 36 to generate, inside the two bladders 32, independent controlled vacuums capable of producing corresponding controlled reductions in the diameters of the respective half-drums. Which reductions in diameter provide for eliminating the errors and, at any rate, permitting both an even overlap of relative end edges 9a and 9b along the whole width of portion 9, when portion 9 is wound onto building drum 18, and hence automatic unsupervised stitching of the two end edges 9a and 9b.

In the event the comparison results in equal, constant errors along both lines 17, logic unit 39 obviously intervenes automatically to eliminate the errors by varying the length of portions 9 by appropriately controlling the rotation speed of roller 5 and the operating times of cutting assembly 7.

## Claims

1. A tire building method, the method comprising the steps of feeding at least one portion (9) of elastomeric material, having two opposite transverse edges (9a, 9b), onto a building drum (18) of variable radial dimensions; measuring distances between corresponding points on said two transverse edges (9a, 9b) prior to feeding said portion (9) onto the building drum (18); and winding said portion (9) onto said building drum (18) so as to overlap said two transverse edges (9a, 9b); said radial dimensions being varied, prior to winding said portion (9) onto said building drum (18), as a function of said distances, so that said two edges (9a, 9b) are overlapped uniformly at all times along the whole width of the portion (9).

2. A method as claimed in Claim 1, wherein said building drum (18) comprises two half-drums (22), the diameters of which can be varied independently of each other; said distances being calculated at at least two locations along the width of said portion (9); each of said two locations being at a respective said half-drum (22); and the diameter of each half-drum (22) being varied as a function of said distance measured at the relative said location.

3. A method as claimed in Claim 1 or 2, wherein said portion (9) is a preassembly comprising a central portion defined by an innerliner (11), and two lateral strips (12), each of which comprises an abrasion strip (14) and a lateral wall (13); said distance being calculated at each said lateral strip (12); and the diameter of each half-drum (22) being varied as a function of the distance measured at the relative said lateral strip (12).

4. A tire building machine, the machine (1) comprising a building drum (18); and a feed conveyor (3) for feeding at least one portion (9) of elastomeric material onto said building drum (18) in a given direction (8); **characterized by** comprising measuring means (15) associated with said conveyor (3) to measure longitudinal dimensions of said portion (9) in said feed direction (8); said building drum (18) being a drum of variable radial dimensions and comprising adjusting means (32, 36) for varying said radial dimensions as a function of said longitudinal dimensions.

5. A machine as claimed in Claim 4, wherein said building drum (18) comprises a cylindrical central body (21) and two half-drums (22) located on opposite sides of said central body (21) and movable axially in opposite directions with respect to the central body (21); said measuring means (15) comprising two measuring devices (16) for measuring respective said longitudinal dimensions at respective locations, each facing a relative said half-drum (22) along a width of said portion (9); and each said half-drum (22) being a half-drum (22) of variable diameter and comprising relative said adjusting means (32, 36) for varying a respective said diameter as a function of the relative said longitudinal dimensions.

6. A machine as claimed in Claim 5, wherein said adjusting means (32, 36) for adjusting said two half-drums (22) are independent of each other.

7. A machine as claimed in Claim 5 or 6, wherein said adjusting means (32, 36) comprise, for each said half-drum (22), at least one annular bladder (32) resting, at rest, on the half-drum (22), said bladder (32) comprising an inner spongy layer (35); and pneumatic means (36) for subjecting said spongy layer (35) to a given adjustable vacuum as a function of the relative said longitudinal dimensions.

8. A machine as claimed in Claim 7, wherein said spongy layer (35) is 3-4 millimeters thick to permit a total variation of about 4 mm in the diameter of the relative half-drum (22).

9. A machine as claimed in one of Claims 5 to 7, wherein each said measuring device (16) is an optical device.

10. A machine as claimed in Claim 8, wherein each said optical device (16) comprises a CCD television camera.
